# EUROPÄISCHE PATENTSCHRIFT

(11) **EP 1 537 704 B1**
(45) Veröffentlichungstag und Bekanntmachung des Hinweises auf die Patenterteilung: **09.01.2008**
(21) Anmeldenummer: 03807778.0
(22) Anmeldetag: 06.08.2003
(51) Int. Cl.: H04L 12/28, H04L 12/56, H04Q 7/38

(54) **VERFAHREN ZUM ROUTEN EINER VERBINDUNG VON EINER ERSTEN MOBILSTATION ZU EINER ZWEITEN MOBILSTATION, FUNKKOMMUNIKATIONSSYSTEM, ZENTRALE ROUTINGEINRICHTUNG SOWIE MOBILSTATION**
METHOD FOR ROUTING A CONNECTION FROM A FIRST MOBILE STATION TO A SECOND MOBILE STATION, WIRELESS COMMUNICATION SYSTEM, CENTRAL ROUTING DEVICE, AND MOBILE STATION
PROCEDE POUR ACHEMINER UNE LIAISON D'UNE PREMIERE STATION MOBILE A UNE SECONDE STATION MOBILE, SYSTEME DE RADIOCOMMUNICATION, SYSTEME D'ACHEMINEMENT CENTRAL ET STATION MOBILE

(30) Priorität: 13.09.2002 EP 02020647
(43) Veröffentlichungstag der Anmeldung: 08.06.2005
(73) Patentinhaber: SIEMENS AKTIENGESELLSCHAFT, 80333 München (DE)
(72) Erfinder: SCHULZ, Egon, 80993 München (DE); LI, Hui, 80937 München (DE); YU, Dan, 81925 München (DE)
(86) Internationale Anmeldenummer: PCT/EP2003/008714
(87) Internationale Veröffentlichungsnummer: WO 2004/034642

(56) Entgegenhaltungen:
- WO-A-01/11833
- CAMARA D ET AL: "A GPS/ant-like routing algorithm for ad hoc networks" IEEE, XP010532722

## Beschreibung

Die Erfindung betrifft ein Verfahren zum Routen einer Verbindung von einer ersten Mobilstation zu einer zweiten Mobilstation über wenigstens eine weitere Mobilstation eines Funkkommunikationssystems sowie ein entsprechendes Funkkommunikationssystem und eine zentrale Routingeinrichtung sowie eine Mobilstation für ein Funkkommunikationssystem.

Auf dem Gebiet der Mobilfunkkommunikation sind zellulare Mobilfunknetze bekannt, bei denen die einzelnen Funkzellen durch jeweils eine Basisstation versorgt werden. Bekannte Standards für zellulare Mobilfunknetze sind beispielsweise GSM (Global System of Mobile Communication) und UMTS (Universal Mobile Telecommunications Standard). Soll in einem solchen zellularen Mobilfunksystem eine Verbindung von einem mobilen Teilnehmer zu einem anderen mobilen Teilnehmer hergestellt werden, wird durch das mit den Basisstationen verbundene Netz eine entsprechende Route festgelegt. Dies geschieht in der Regel durch eine zentrale Einheit des Mobilfunknetzes. Die hierdurch festgelegte Route beginnt bei einer der beteiligten Mobilstationen als Startmobilstation und führt zunächst zur Basisstation derjenigen Funkzelle, in der sich die Startmobilstation befindet. Von dieser ersten Basisstation werden die Daten der Verbindung anschließend entweder direkt zur Zielmobilstation übermittelt (sofern sich diese ebenfalls in derselben Funkzelle befindet) oder sie werden zu einer zweiten Basisstation übermittelt, in deren Funkzelle sich die Zielmobilstation befindet und die anschließend die Daten der Verbindung zu der Zielmobilstation überträgt.

Weiterhin sind im Rahmen der Mobilfunkkommunikation sogenannte selbstorganisierende Netze bzw. ad-hoc-Netze bekannt, die lediglich durch Mobilstationen gebildet werden, ohne dass Basisstationen mit ihren Funkzellen zum Einsatz kommen. Bei diesen ad-hoc-Netzen übernehmen die Mobilstationen eine Relaisfunktion, so dass Daten einer Verbindung von einer Startmobilstation zu einer Zielmobilstation unmittelbar über eine oder mehrere andere Mobilstationen weitergeleitet werden. Das Routing in einem ad-hoc-Netz wird nach bestimmten Algorithmen durch die beteiligten Mobilstationen selbst durchgeführt. Hierzu sendet die Startmobilstation beispielsweise eine Adresse der Zielmobilstation an alle sie umgebenden Mobilstationen, um ihren Verbindungswunsch zu signalisieren. Diese Signalisierungsinformationen werden von den umliegenden Mobilstationen weiterübermittelt, bis sie die Zielstation erreichen. Für die letztlich erfolgreich hergestellte Route werden in den beteiligten Mobilstationen jeweils die Adressen der auf der ermittelten Route benachbarten Mobilstationen gespeichert.

Ein Beispiel für ein in den Mobilstationen eines ad-hoc-Netzes dezentral durchgeführtes Routing-Verfahren ist aus CAMARA ET AL "A GPS/ant-like routing algorithm for ad hoc networks", IEEE, bekannt.

Ferner sind Mobilfunksysteme bekannt, bei denen bei einer zellularen Netzstruktur Mobilstationen zum Einsatz kommen, die auch unmittelbar miteinander nach der Art eines ad-hoc-Netzes kommunizieren können. Auf diese Weise können beispielsweise Lücken zwischen den einzelnen Funkzellen des zellularen Netzes über mehrere Mobilstationen als Relaisstationen geschlossen werden. Derartige zellulare Mobilfunknetze mit ad-hoc-Komponente sind beispielsweise in Y.-D. Lin et. al. "Multihop Cellular: A new architecture for wireless communications", IEEE INFOCOM 2000, Seite 1273 bis 1282, H.WU et. al. "Integrated cellular and ad-hoc relaying systems: iCAR", IEEE Journal on selected areas in communications, Vol.19, No.10, October 2001, Seite 2105 bis 2115; R. Ananthapadmanabha et. al. "Multihop Cellular Networks: the architecture and routing protocols", IEEE PIMRC 2001 sowie im Konzept der Group Delta für den Wideband TDMA/CDMA-UMTS-Standard, ETSI SMG2#24 Tdoc SMG 899/97, Madrid, Spanien, 15. - 19. Dezember 1997 beschrieben.

Bei den genannten zellularen Mobilfunknetzen, bei denen auch Mobilstationen mit Relaisfunktion vorgesehen sind, erfolgt das Routing von Mobilstation zu Mobilstation auf die oben geschilderte übliche Art eines ad-hoc-Netzes. Derjenige Teil einer Verbindung, der über die Basisstationen des Netzes geführt wird, wird dagegen wie bei einem herkömmlichen zellularen Mobilfunknetz geroutet, das heißt durch eine in der Regel zentrale Routingeinrichtung des Netzes.

Der Erfindung liegt die Aufgabe zugrunde, das Routen einer Verbindung von einer ersten Mobilstation zu einer zweiten Mobilstation über wenigstens eine weitere Mobilstation, wie es beispielsweise in einem ad-hoc-Netz notwendig ist, in vorteilhafter Weise zu realisieren.

Diese Aufgabe wird durch das Verfahren gemäß Anspruch 1, das Funkkommunikationssystem gemäß Anspruch 11, die zentrale Routingeinrichtung gemäß Anspruch 12 sowie die Mobilstation gemäß Anspruch 13 gelöst.

Vorteilhafte Aus- und Weiterbildungen der Erfindung sind Gegenstand von abhängigen Ansprüchen.

Beim erfindungsgemäßen Verfahren zum Routen einer Verbindung von einer ersten Mobilstation zu einer zweiten Mobilstation über eine oder mehrere weitere Mobilstationen werden zunächst Positionsinformationen über die Mobilstationen erfasst. Anschließend ermittelt eine zentrale Routingeinrichtung eine Route für die Verbindung anhand der erfassten Positionsinformationen und erzeugt entsprechende Routinginformationen, die daraufhin an die an der Verbindung beteiligten Mobilstationen übermittelt werden.

Die Mobilstationen kommunizieren unmittelbar miteinander. Daher haben die weiteren Mobilstationen eine Relaisfunktion für die von der ersten Mobilstation zur zweiten Mobilstation zu übertragenden Daten der Verbindung.

Positionsinformationen sind Informationen über die geografische Position der Mobilstationen, die dazu geeignet sind, die gegenseitige Anordnung der Mobilstationen im Funkkommunikationssystem zu bestimmen, so dass anhand dieser Positionsinformationen das Routing durchgeführt werden kann. Bei den Positionsinformationen kann es sich beispielsweise um mittels eines Positionsermittlungssystems wie beispielsweise GPS ermittelte Positionskoordinaten handeln.

Während bei Routingverfahren für ad-hoc-Netze das Routing durch die beteiligten Mobilstationen selbst erfolgt, sieht die Erfindung hierfür eine spezielle Routingeinrichtung vor. Die zentrale Routingeinrichtung kann beim Routen die erfassten Positionsinformationen einer Vielzahl von Mobilstationen berücksichtigen. Dies kann im Extremfall alle vorhandenen Mobilstationen betreffen. Auf diese Weise kann eine optimale Route in einfacher Weise ermittelt werden.

Die Durchführung des Routings durch die zentrale Routingeinrichtung ermöglicht eine Verminderung des Stromverbrauchs bei Mobilstationen und eine Reduzierung des Signalisierungsaustausches zwischen den Mobilstationen gegenüber der Durchführung des Routings durch die Mobilstationen selbst, wie beim Stand der Technik.

Unter "Mobilstation" wird hier jegliche mobile Funkstation verstanden, die für den Einsatz in einem Funkkommunikationssystem vorgesehen ist und die eine direkte Kommunikation mit einer anderen Mobilstation unterhalten kann.

Nach einer Weiterbildung der Erfindung befinden sich die Mobilstationen im Funkbereich wenigstens einer Basisstation eines zellularen Mobilfunknetzes. Die Routingeinrichtung überträgt dann die Routinginformationen zu den Basisstationen, die die Routinginformationen weiter zu den Mobilstationen übertragen. Das bedeutet, dass die Mobilstationen mit Relaisfunktion im Versorgungsbereich des zellularen Mobilfunknetzes betrieben werden. Insofern gibt es Ähnlichkeiten zu den weiter oben beschriebenen Konzepten, bei denen auch Mobilstationen mit Relaisfunktion im Zusammenhang mit zellularen Netzen betrieben werden. Allerdings erfolgt erfindungsgemäß im Gegensatz zu diesen auch das Routing auch für die unmittelbaren Relaisverbindungen zwischen den Mobilstationen nicht durch die Mobilstationen selbst, sondern durch die mit den Basisstationen des zellularen Mobilfunknetzes verbundene zentrale Routingeinrichtung.

Die Erfindung lässt es zu, dass die Verbindung zwischen der ersten Mobilstation und der zweiten Mobilstation lediglich ein Ausschnitt einer längeren Verbindung zwischen weiteren Mobilstationen ist. In einem solchen Fall kann ausgehend von einer Startmobilstation beispielsweise über eine oder mehrere Basisstationen des zellularen Netzes zunächst eine Teilverbindung zur ersten Mobilstation und/oder von der zweiten Mobilstation über eine oder mehrere Basisstationen eine weitere Teilverbindung zur Zielstation der gesamten Verbindung hergestellt werden. Die Verbindung zwischen der ersten und der zweiten Mobilstation ist dann lediglich eine Teilverbindung der gesamten Verbindung zwischen Start- und Zielstation.

Nach einer Weiterbildung der Erfindung ermitteln die Mobilstationen ihre Positionsinformationen selbst und übertragen sie zu ihrer Erfassung zu den Basisstationen. Vorteilhafterweise können die Basisstationen die Positionsinformationen dann zu einer zentralen Speichereinrichtung übermitteln, auf die die Routingeinrichtung zur Ermittlung der Route zugreifen kann.

Nach einer Weiterbildung der Erfindung haben die Mobilstationen eine erste Betriebsart, in der sie im zellularen Mobilfunknetz gemäß einem ersten Funkstandard betrieben werden. Dieser erste Funkstandard kann ein beliebiger Standard für ein zellulares Mobilfunknetz wie beispielsweise GSM oder UMTS sein. Die Mobilstationen haben bei dieser Weiterbildung eine zweite Betriebsart, in der sie miteinander ein ad-hoc-Netz nach einem zweiten Funkstandard bilden. Es handelt sich daher um sogenannte Dualmode-Mobilstationen. Während der Verbindung, für die die Routingeinrichtung die Routinginformationen ermittelt, werden die Mobilstationen in der zweiten Betriebsart betrieben. Hierbei wird unter ad-hoc-Netz ein Mobilfunknetz verstanden, bei dem die einzelnen Mobilstationen Relaisfunktionen für die Übermittlung von Daten einer Verbindung wahrnehmen. In der ersten und zweiten Betriebsart kann gemäß dem ersten bzw. zweiten Funkstandard vorgesehen sein, dass die Mobilstationen in jeweils unterschiedlichen Frequenzbereichen nach unterschiedlichen Protokollen miteinander kommunizieren. Das Funkkommunikationssystem besteht dann gewissermaßen aus zwei überlagerten Netzen, nämlich dem zellularen Netz und dem ad-hoc-Netz.

Nach einer Weiterbildung der Erfindung werden die Mobilstationen erst dann in die zweite Betriebsart versetzt, wenn das zellulare Mobilfunknetz einen Grenzwert seiner Kapazitätsauslastung erreicht. Bei dieser Weiterbildung dient das Ausnutzen der Relaisfunktion der Mobilstationen lediglich dazu, die Gesamtkapazität des Funkkommunikationssystems zu erhöhen, sofern das notwendig ist. Solange die Notwendigkeit nicht besteht, kann auf die Ermittlung der Routen durch die zentrale Routingeinrichtung anhand der erfassten Positionsinformationen sowie auf die Übermittlung der entsprechenden Routinginformationen an die Mobilstationen verzichtet werden und stattdessen das Routing wie in herkömmlichen zellularen Mobilfunksystemen üblich erfolgen. Hierdurch wird während der Unterschreitung des Grenzwertes der Kapazitätsauslastung der Aufwand für die Ermittlung der Route gering gehalten. Es ist jedoch auch vorteilhaft, wenn die Routingeinrichtung das Routen sowohl für das ad-hoc-Netz als auch für das zellulare Netz übernimmt.

Nach einer Weiterbildung der Erfindung stellt die zweite Mobilstation einen bestimmten Dienst zur Verfügung. In einer Speichereinrichtung werden Dienstinformationen über den von der zweiten Mobilstation zur Verfügung gestellten Dienst gespeichert, die der ersten Mobilstation mitgeteilt werden. Die erste Mobilstation signalisiert dann aufgrund der ihr mitgeteilten Dienstinformationen der Routingeinrichtung, dass sie auf den Dienst zugreifen möchte. Die Routingeinrichtung stellt dann die Verbindung von der ersten Mobilstation zur zweiten Mobilstation her, indem sie die entsprechenden Routinginformationen erzeugt. Unter Dienst (Service) wird hier jeder beliebige Dienst innerhalb eines Mobilfunknetzes verstanden, zu dem eine mobile Station einen Zugang anbieten kann. Bei einem solchen Dienst kann es sich beispielsweise um einen ortsabhängigen Dienst handeln, der in Abhängigkeit von der Position einer Mobilstation beispielsweise Informationen über in der Nähe befindliche Restaurants oder Kinos zur Verfügung stellt. Ein weiterer Dienst ist beispielsweise die zur Verfügungstellung eines Zugangs zum Internet oder zu anderen Netzen.

Nach einer Weiterbildung der Erfindung senden die Basisstationen die in der Speichereinrichtung gespeicherten Serviceinformationen rund (Brodcasting). Es können Dienstinformationen über von einer Vielzahl von Mobilstationen zur Verfügung gestellten Diensten in der Speichereinrichtung gespeichert werden und den übrigen Mobilstationen durch das Rundsenden der Basisstationen bekannt gegeben werden. Dann ist jede Mobilstation in der Lage, eine Verbindung zu dem gewünschten Dienst bei der zentralen Routingeinrichtung anzufordern. Da die Position jeder sich im Mobilfunksystem befindlichen Mobilstation erfasst werden kann, hat die Routingeinrichtung auch Kenntnis von der Position der den jeweiligen Dienst zur Verfügung stellenden Mobilstation. Sie kann daher bei einer Anforderung des entsprechenden Dienstes eine Verbindung zu der diesen Dienst zur Verfügung stellenden Mobilstation herstellen.

Nach einer Weiterbildung der Erfindung erhalten die Routinginformationen Angaben darüber, mit welcher Sendeleistung die an der Verbindung beteiligten Mobilstationen die Verbindung betreiben sollen. Da die Routingeinrichtung Kenntnis von der Position der beteiligten Mobilstationen hat, kennt sie auch die Abstände zwischen den Mobilstationen und kann daher die für die Übermittlung zur nächsten Mobilstation innerhalb der Route erforderliche Sendeleistung berechnen. Hierdurch ist eine Minimierung der insgesamt erforderlichen Sendeleistung im System möglich und es werden die Interferenzen auf ein Minimum reduziert.

Nach einer Weiterbildung der Erfindung enthalten die Routinginformationen Angaben darüber, welche Übertragungsressourcen die an der Verbindung beteiligten Mobilstationen für die Verbindung reservieren sollen. Unter "Übertragungsressourcen" werden hier alle für die Übertragung erforderlichen Funkressourcen verstanden, beispielsweise Frequenzbereiche bei einem FDMA-System, Spreizcodes bei einem CDMA-System und Zeitschlitzen bei einem TDMA-System..

Nach einer Weiterbildung der Erfindung weist die Routingeinrichtung nach der Beendigung der Verbindung die an der Verbindung beteiligten Mobilstationen an, die Reservierung der Übertragungsressourcen für diese Verbindung zu beenden. Auf diese Weise stehen die zuvor reservierten Übertragungsressourcen für den Aufbau neuer Verbindungen wieder zur Verfügung.

Das erfindungsgemäße Funkkommunikationssystem sowie die erfindungsgemäße zentrale Routingeinrichtung und die erfindungsgemäße Mobilstation für ein Funkkommunikationssystem weisen die für die Durchführung des erfindungsgemäßen Verfahrens notwendigen Komponenten auf und sind in entsprechender Weise ausgebildet.

Die Erfindung wird im folgenden anhand von in den Figuren dargestellten Ausführungsbeispielen näher erläutert. Es zeigen:
- Figur 1: ein Ausführungsbeispiel des erfindungsgemäßen Funkkommunikationssystems und
- Figur 2: ein Ausführungsbeispiel einer Mobilstation für das in Figur 1 dargestellte Funkkommunikationssystem.

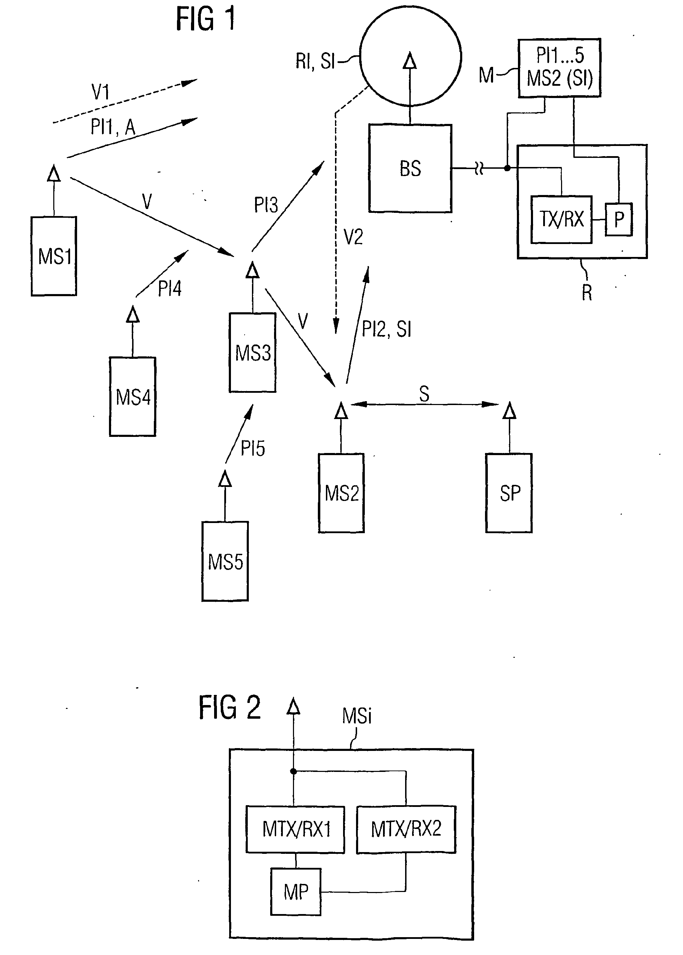

Figur 1 zeigt einen Ausschnitt einer Funkzelle eines zellularen Mobilfunksystems. Dargestellt ist eine Basisstation BS, die die Funkzelle versorgt, sowie eine Reihe von Mobilstationen MS1 bis MS5, die sich in der Funkzelle befinden. Die zweite Mobilstation MS2 unterhält eine Funkverbindung zu einem Diensteanbieter SP. Der Diensteanbieter SP bietet einen beliebigen Dienst, beispielsweise einen Zugang zum Internet, an. Über die Verbindung S kann die zweite Mobilstation MS2 den oder die Dienste des Diensteanbieters SP anderen Teilnehmern des Mobilfunksystems zur Verfügung stellen. Die zweite Mobilfunkstation MS2 übermittelt Dienstinformationen SI zur Basisstation BS, die den zur Verfügung gestellten Dienst beschreiben und von der Basisstation BS in einer zentralen Speichereinrichtung M des Mobilfunksystems in Zuordnung zu einer Kennung der zweiten Mobilstation MS2 gespeichert werden.

Alle in Betrieb befindlichen Mobilstationen MS1 bis MS5 des Mobilfunksystems senden periodisch Positionsinformationen PI1 bis PI5 an die Basisstation BS, die diese ebenfalls in Zuordnung zu der jeweiligen Mobilstation in der zentralen Speichereinrichtung M speichert. Die Positionsinformationen PI1 bis PI5 bezeichnen die geografische Position der jeweiligen Mobilstation MS1 bis MS5 in der jeweiligen Funkzelle des Mobilfunksystems.

Die Positionsinformationen PI1 bis PI5 werden von den Mobilstationen MS1 bis MS5 mittels GPS-Empfängern ermittelt. Bei anderen Ausführungsformen der Erfindung können die Positionsinformationen PI1 bis PI5 statt durch die Mobilstationen MS1 bis MS5 auch mittels der Basisstationen BS des Mobilfunksystems ermittelt werden. Verfahren zur Bestimmung der Position einer Mobilstation in einem zellularen Mobilfunksystem sind dem Fachmann hinreichend bekannt und werden hier nicht weiter erläutert.

Alle Basisstationen BS des Mobilfunksystems übertragen die in der zentralen Speichereinrichtung M gespeicherten Dienstinformationen SI durch Rundsenden (broadcasting). Hierdurch werden die Dienstinformationen SI allen Mobilfunkstationen MS1 bis MS5 zugänglich gemacht. Die Dienstinformation SI informieren auf diese Weise die Mobilstationen MS1 bis MS5 darüber, welche speziellen Dienste im Mobilfunksystem zur Verfügung stehen.

Die erste Mobilstation MS1 in Figur 1 entscheidet aufgrund der von der Basisstation BS ausgesandten Dienstinformationen SI, auf den durch diese signalisierten Dienst zugreifen zu wollen. Sie übermittelt eine dementsprechende Verbindungsanfrage A zur Basisstation BS ihrer Funkzelle.

Das Mobilfunksystem in Figur.1 weist weiterhin eine zentrale Routingeinrichtung R auf mit einer Sende-/ Empfangseinrichtung TX/RX zur Kommunikation mit den Basisstationen BS des Mobilfunksystems sowie einem Prozessor P zu ihrer Steuerung. Die Basisstation BS übermittelt die Verbindungsanfrage A der ersten Mobilstation MS1 zur Routingeinrichtung R. Die Routingeinrichtung R greift auf die in der Speichereinrichtung M gespeicherten Positionsinformationen PI1 bis PI5 aller im Mobilfunksystem erfassten Mobilstationen MS1 bis MS5 zu. Weiterhin stellt die Routingeinrichtung R aufgrund des Eintrags im Speicher M fest, dass die zweite Mobilstation MS2 den von der ersten Mobilstation MS1 gewünschten Dienst zur Verfügung stellt. Die Routingeinrichtung R berechnet daraufhin eine möglichst optimale Route für eine Verbindung V zwischen der ersten Mobilstation MS1 und der zweiten Mobilstation MS2. Im in Figur 1 dargestellten Fall führt diese Verbindung V von der ersten Mobilstation MS1 über die dritte Mobilstation MS3 zur zweiten Mobilstation MS2. Es sind selbstverständlich andere Fälle denkbar, bei der mehr als eine Mobilstation MS3 als Relaisstation zur Herstellung der Verbindung V bestimmt wird. Bei der Auswahl der für die Verbindung V verwendeten Route berücksichtigt die Routingeinrichtung R die geografische Position der Mobilstationen und versucht einen möglichst kurzen Weg zu realisieren, um die für die Verbindung V notwendige Sendeleistung zu minimieren. Außerdem berücksichtigt die Routingeinrichtung R, in welchem Maße bereits durch andere Verbindungen Ressourcen der Mobilstation MS1 - MS5 in Form von Frequenzbereichen, Spreizcodes oder Zeitschlitzen belegt sind.

Die Routingeinrichtung R in Figur R erzeugt der von ihr ermittelten Route entsprechende Routinginformationen RI, die sie zur Basisstation BS derjenigen Funkzellen überträgt, in der sich die an der Verbindung V beteiligten Mobilstationen MS1, MS2, MS3 befinden. Die Basisstation BS broadcasted diese Routinginformationen RI, so dass sie von den betroffenen Mobilstationen MS1 bis MS3 empfangen werden können. Die Routinginformationen RI informieren die Mobilstationen MS1 bis MS3 darüber, von welcher Mobilstation MSi sie Daten der Verbindung V für eine weitere Übertragung als Relaisstation empfangen sollen und zu welcher Mobilstation MSi sie diese Daten weiterübertragen sollen. Für die erste Mobilstation MS1 gibt es keine vorhergehende Station in der Route der Verbindung V, da sie die Startstation ist. Ihr wird daher nur mitgeteilt, dass sie ihre Daten zur dritten Mobilstation MS3 übertragen soll. Die Routinginformationen RI für die dritte Mobilstation MS3 sagen dieser, dass sie Daten von der ersten Mobilstation MS1 empfangen und zur zweiten Mobilstation MS2 weiterleiten soll. Über die Routinginformationen RI erfährt die zweite Mobilstation MS2, dass sie Aussendungen der dritten Mobilstation MS3 für die Verbindung V empfangen soll. Da die zweite Mobilstation MS2 die Zielstation der Verbindung V ist, wird ihr über die Routinginformationen RI keine weitere Mobilstation MSi mitgeteilt, zu der sie die Daten weiterleiten soll.

Das vorstehend erläuterte Verfahren zum Routen der Verbindung V durch die Routingeinrichtung R kann selbstverständlich auch unabhängig von der Anforderung eines speziellen Dienstes durch die erste Mobilstation MS1 erfolgen. Die Routingeinrichtung R kann aufgrund der in der Speichereinrichtung M gespeicherten Positionsinformationen PI1 bis PI5 jeder Mobilstation MS1 bis MS5 aufgrund einer Verbindungsanfrage A beispielsweise für eine Sprachverbindung von der ersten Mobilstation MS1 zur zweiten Mobilstation MS2 ebenfalls das oben beschriebene Verfahren durchführen.

Figur 2 zeigt den Aufbau der Mobilstationen MSi aus Figur 1. Sie enthalten eine mit ihrer Antenne verbundene erste Sende-/Empfangseinheit MTX/RX1 zur Kommunikation mit der Basisstation BS sowie eine mit der Sende-/ Empfangseinrichtung MTX/RX verbundene Steuereinrichtung MP, die insbesondere dazu dient, die von der Basisstation BS empfangenen Routinginformationen RI und Dienstinformationen SI auszuwerten. Die Steuereinrichtung MP steuert die Mobilstation MSi dann so, dass sie entsprechend der empfangenen Routinginformationen RI zu übertragenden Daten der Verbindung V zu der nächsten von der Routingeinrichtung R für die Verbindung V bestimmten Relaisstation überträgt. Diese Daten können entsprechend den Routinginformationen RI bereits von einer weiteren Mobilstation geliefert werden, für die die aktuelle Mobilstation MSi wiederum als Relaisstation fungiert.

Bei dem in Figur 1 dargestellten Mobilfunksystem handelt es sich sozusagen um eine örtliche Überlagerung eines zellularen Mobilfunknetzes mit einem ad-hoc-Netz, das durch die Mobilstationen MS1 bis MS5 als mobile Knoten gebildet wird. Die Mobilstation MSi in Figur 2 weist daher neben der ersten Sende-/Empfangseinrichtung MTX/RX1 für die Kommunikation nach dem ersten Funkstandard mit dem zellularen Mobilfunknetz des Mobilfunksystems auch noch eine zweite Sende-/Empfangs-einrichtung MTX/RX2 zur Kommunikation mit den anderen Mobilstationen gemäß dem zweiten Standard des ad-hoc-Netzes des Mobilfunksystems auf.

Das ad-hoc-Netz arbeitet nach dem IEEE 802.11 WLAN (wireless local area network)-Standard.

Beim hier betrachteten Ausführungsbeispiel besitzen die Mobilstationen MS1 bis MS5 jeweils gerichtete Antennen für die Kommunikation miteinander. Daher enthalten die Routinginformationen RI für jede der an der Verbindung vorbeteiligten Mobilstationen MS1 bis MS3 auch Informationen darüber, in welche Richtung die Daten der Verbindung V durch die jeweiligen Station zur nächsten Relaisstation mittels ihrer gerichteten Antennen übertragen werden sollen bzw. aus welcher Richtung sie die zu ihnen übertragenen Daten empfangen sollen. Weiterhin enthalten die Routinginformationen RI für jede der an der Verbindung V beteiligten Mobilstationen MS1 bis MS3 einen Wert der zu verwendenden Sendeleistung, deren Wert in Abhängigkeit von der Distanz zwischen den einzelnen miteinander kommunizierenden Mobilstationen gewählt wird. Die Routinginformationen RI enthalten weiterhin die Anweisung, welche Übertragungs- bzw. Funkressourcen (Frequenzbereich, Spreizcode und Zeitschlitz bei einem FD/CD/TDMA-Vielfachzugriffsverfahren) durch die einzelne Mobilstation MS1 bis MS3 für die Verbindung V verwendet bzw. belegt werden sollen. Bei Beendigung der Verbindung V wird den an der Verbindung V beteiligten Mobilstationen MS1 bis MS3 über die Routinginformationen RI auch mitgeteilt, dass die für die Verbindung V reservierten Übertragungsressourcen nun wieder für andere Verbindungen freizugeben sind. Für die geschilderte Ressourcensteuerung der einzelnen Mobilstationen MS1 bis MS5 durch die zentrale Routingeinrichtung R des Mobilfunksystems ist es notwendig, dass die Routingeinrichtung ständig über die aktuelle Belegung der Ressourcen jeder einzelnen Mobilstation informiert ist. Sie weist daher die hierfür erforderlichen Speichermittel auf (in Fig. 1 nicht dargestellt).

Alternativ zu Figur 1 kann die Aussendung der Routinginformationen RI und/oder der Dienstinformationen SI durch die Basisstationen BS des Mobilfunksystems auch statt durch Rundsenden (Broadcasten) auch durch eine Punkt zu Punkt-Übertragung zur jeweiligen Mobilstation MSi erfolgen. Hierzu kann die Basisstation BS beispielsweise auch mit gerichteten Antennen ausgerüstet sein. Aufgrund der in der Speichereinrichtung M gespeicherten Positionsinformationen PI1 bis PI5 über die Mobilstationen MSi ist es problemlos möglich, derartige gerichtete Antennen zur Übermittlung der gewünschten Daten an bestimmte Mobilstationen entsprechend auszurichten.

Die in Figur 1 dargestellten Mobilstationen MS1 - MS5 sind sogenannte Dualmode-Geräte, die in einer ersten Betriebsart gemäß einem ersten Funkstandard für ein zellulares Mobilfunknetz und in einer zweiten Betriebsart nach einem zweiten Funkstandard für ein ad-hoc-Netz betrieben werden können. Der erste Funkstandard kann ein beliebiger Standard für ein zellulares Mobilfunknetz, beispielsweise der GSM-Standard, sein. Solange die Übertragungskapazität der Basisstationen BS des Mobilfunksystems nicht ausgelastet ist, werden bevorzugt Verbindungen nach dem ersten Funkstandard hergestellt. Dies ist in Figur 1 mittels der gestrichelten Pfeile V1, V2 dargestellt. Solange die Kapazitätsgrenze des Systems für die Übertragung nach dem ersten Funkstandard nicht erreicht ist, wird eine Verbindung zwischen der ersten Mobilstation MS1 und der zweiten Mobilstation MS2 über die Basisstation BS geführt. Befindet sich die zweite Mobilstation MS2 (anders als in Figur 1 dargestellt) in einer anderen Funkzelle als die erste Mobilstation MS1, wird.die Verbindung V1, V2 gegebenenfalls auch über mehrere Basisstationen BS geführt. Erst nach Überschreiten der gewählten Kapazitätsgrenze für die Übertragung von Verbindungen nach dem ersten Funkstandard, werden weitere Verbindungen V nach dem zweiten Funkstandard auf die oben beschriebene Weise hergestellt. Dabei sind für den Betrieb nach dem ersten und dem zweiten Funkstandard bei dem in Figur 1 dargestellten Ausführungsbeispiel unterschiedliche Frequenzbereiche und unterschiedliche Übertragungsprotokolle vorgesehen. Daher handelt es sich im Prinzip um die Überlagerung eines herkömmlichen zellularen Mobilfunksystems nach dem ersten Funkstandard mit einem davon nahezu vollständig unabhängigen ad-hoc-Netz nach dem zweiten Funkstandard.

Eine Abhängigkeit zwischen den beiden Netzen besteht lediglich hinsichtlich des Routings aller Verbindungen V1, V2, V durch die zentrale Routingeinrichtung R des Mobilfunksystems.

Daher kann durch den Aufbau neuer Verbindungen V nach dem zweiten Funkstandard die Kapazität des gesamten Mobilfunksystems erhöht werden, denn die Übertragungskapazitäten bzw. Übertragungsressourcen des zellularen Mobilfunknetzes sind größtenteils unabhängig von den Übertragungsressourcen des ad-hoc-Netzes.

Durch die zentrale Routingeinrichtung R der Erfindung ist es möglich, ein Routing für Verbindungen V innerhalb des ad-hoc-Netzes durchzuführen, ohne dass innerhalb der Mobilstationen MS1 bis MS5, die ansonsten bei ad-hoc-Netzen notwendigen komplizierten Algorithmen zum Routen einer Verbindung durchgeführt werden müssen. Hierdurch kann der Rechenaufwand und der damit verbundene hohe Stromverbrauch innerhalb der Mobilstationen reduziert werden.

Außer dem Stromverbrauch der einzelnen Mobilstationen wird durch die Durchführung des Routings durch die zentrale Routingeinrichtung auch der für das normalerweise in einem ad-hoc-Netzwerk durchgeführte Routing erforderliche Datenaustausch zwischen den einzelnen Mobilstationen reduziert, so dass die Auslastung des Kommunikationssystems reduziert werden kann.

Beim Ausführungsbeispiel gemäß Figur 1 übertragen alle Mobilstationen, die bestimmte Dienste zur Verfügung stellen, entsprechende Dienstinformationen SI zur jeweiligen Basisstation S. Dies erfolgt periodisch, damit die in der Speichereinrichtung M gespeicherten Dienstinformationen SI, ebenso wie die Positionsinformationen RI, jeweils aktualisiert werden.

Bei dem hier betrachteten Ausführungsbeispiel müssen die Mobilstationen MSi die für die Verbindung V von der Routingeinrichtung R ermittelte Route entsprechend den ihnen mitgeteilten Routinginformationen RI umsetzen. Es sind aber andere Ausführungsbeispiele möglich, bei denen die Routinginformationen RI nur als Vorschlag an die Mobilstationen MSi dienen. Insbesondere ist es möglich, dass mehrere derartige Vorschläge von der Routingeinrichtung R ermittelt und an die Mobilstationen MS1 - MS3 der jeweiligen herzustellenden Verbindung V übermittelt werden. Die Mobilstationen können dann selbst entscheiden, welche Route tatsächlich realisiert werden soll. Bei anderen Ausführungsbeispielen der Erfindung ist es auch möglich, dass über die Routinginformationen RI sowohl eine Verbindung über das zellulare Mobilfunknetz (also unter Beteiligung wenigstens einer der Basisstationen BS), als auch über das ad-hoc-Netz (also unter Zuhilfenahme von Relaisstationen) zur Auswahl angeboten werden. Die Auswahl der angebotenen Route erfolgt sinnvollerweise durch die als Startstation der Verbindung V fungierende erste Mobilstation MS1.

Aufgrund der ständigen Aktualisierung der in der Speichereinrichtung M erfassten Positionsinformationen PI1 bis PI5 kann die Routingeinrichtung R ständig überprüfen, ob die bestehende Verbindung V mit der gewählten Route noch optimal betrieben wird. So kann auch bei bereits bestehender Verbindung V eine bislang gewählte Route verworfen werden und die Verbindung V über eine neue Route aufgebaut werden, die den entsprechenden Mobilstationen über die Routinginformationen RI mitgeteilt wird. Günstigerweise werden sicherheitsrelevante Informationen wie beispielsweise Identifizierungsinformationen der Teilnehmer und Authentifizierungsinformationen sowie Verschlüsselungs-Codes über das sicherere zellulare Mobilfunknetz übertragen und nur weniger sicherheitsrelevante Daten über das ad-hoc-Netz.

Im Falle von alternativ angebotenen Routen, von denen eine über das zellulare Mobilfunknetz und eine innerhalb des ad-hoc-Netzes verläuft, kann ein Teilnehmer bzw. eine Mobilstation MSi vorteilhafterweise die Auswahl von den unterschiedlichen Kosten für den Betrieb einer Verbindung in den beiden Netzen abhängig machen. In dem hier betrachteten Fall, bei dem das ad-hoc-Netz nach dem IEEE 802.11-Standard arbeitet, befinden sich die hierfür zu verwendenden Frequenzen im unlizenzierten Bereich des Funkspektrums. Daher kann der Betreiber des Mobilfunksystems für Verbindungen innerhalb des ad-hoc-Netzes günstigere Gebühren anbieten als für Verbindungen innerhalb des zellularen Mobilfunknetzes, das einen Frequenzbereich benutzt, für den für gewöhnlich Lizenzgebühren an eine staatliche Aufsichtsbehörde zu entrichten sind.

## Patentansprüche

1. Verfahren zum Routen einer Verbindung (V) von einer ersten Mobilstation (MS1) zu einer zweiten Mobilstation (MS2) über wenigstens eine weitere Mobilstation (MS3) in einem Funkkommunikationssystem, bei dem Positionsinformationen (PI1..3) über die erste Mobilstation (MS1), die zweite Mobilstation (MS2) und über die weiteren Mobilstationen (MS3) erfasst werden, **dadurch gekennzeichnet, daß**
- eine zentrale Routingeinrichtung (R) eine Route für die Verbindung (V) anhand der Positionsinformationen (PI1..3) ermittelt,
- und die Routingeinrichtung (R) Routinginformationen (RI) erzeugt, die der ermittelten Route entsprechen, und diese Routinginformationen an die erste Mobilstation (MS1), die zweite Mobilstation (MS2) sowie die weiteren Mobilstationen (MS3) übermittelt.

2. Verfahren nach Anspruch 1, bei dem
- die Mobilstationen (MS1, MS2, MS3) sich im Funkbereich wenigstens einer Basisstation (BS) eines zellularen Mobilfunknetzes befinden,
- die Routingeinrichtung (R) die Routinginformationen (RI) zu den Basisstationen (BS) überträgt
- und die Basisstationen (BS) die Routinginformationen (RI) zu den Mobilstationen (MS1, MS2, MS3) übertragen.

3. Verfahren nach Anspruch 2, bei dem die Mobilstationen (MS1, MS2, MS3) die Positionsinformationen (PI1..3) ermitteln und zu ihrer Erfassung zu den Basisstationen (BS) übertragen.

4. Verfahren nach einem der Ansprüche 2 oder 3, bei dem
- die Mobilstationen (MS1, MS2, MS3) eine erste Betriebsart haben, in der sie im zellularen Mobilfunknetz gemäß einem ersten Funkstandard betrieben werden,
- die Mobilstationen (MS1, MS2, MS3) eine zweite Betriebsart haben, in der sie miteinander ein ad-hoc-Netz nach einem zweiten Funkstandard bilden,
- und während der Verbindung (V), für die die Routingeinrichtung (R) die Routinginformationen (RI) ermittelt, die Mobilstationen (MS1, MS2, MS3) in der zweiten Betriebsart betrieben werden.

5. Verfahren nach Anspruch 4, bei dem die Mobilstationen (MS1, MS2, MS3) erst in die zweite Betriebsart versetzt werden, wenn das zellulare Mobilfunknetz einen Grenzwert seiner Kapazitätsauslastung erreicht.

6. Verfahren nach einem der vorstehenden Ansprüche, bei dem
- die zweite Mobilstation (MS2) einen bestimmten Dienst (S) zur Verfügung stellt,
- in einer Speichereinrichtung (M) Dienstinformationen (SI) über den von der zweiten Mobilstation (MS2) zur Verfügung gestellten Dienst (S) gespeichert werden,
- die gespeicherten Dienstinformationen (SI) der ersten Mobilstation (MS1) mitgeteilt werden,
- die erste Mobilstation (MS1) aufgrund der ihr mitgeteilten Dienstinformationen (SI) der Routingeinrichtung (R) signalisiert, dass sie auf den Dienst (S) zugreifen möchte,
- und die Routingeinrichtung (R) daraufhin die Verbindung (V) von der ersten Mobilstation (MS1) zur zweiten Mobilstation (MS2) herstellt, indem sie die entsprechenden Routinginformationen (RI) erzeugt.

7. Verfahren nach Anspruch 6 in Verbindung mit einem der Ansprüche 2 bis 5, bei dem
die Basisstationen (BS) die in der Speichereinrichtung (M) gespeicherten Serviceinformationen (SI) rundsenden.

8. Verfahren nach einem der vorstehenden Ansprüche, bei dem die Routinginformationen (RI) Angaben darüber enthalten, mit welcher Sendeleistung die an der Verbindung beteiligten Mobilstationen (MS1, MS2, MS3) die Verbindung (V) betreiben sollen.

9. Verfahren nach einem der vorstehenden Ansprüche, bei dem die Routinginformationen (RI) Angaben darüber enthalten, welche Übertragungsressourcen die an der Verbindung beteiligten Mobilstationen (MS1, MS2, MS3) für die Verbindung (V) reservieren sollen.

10. Verfahren nach Anspruch 8, bei dem
die Routingeinrichtung (R) nach der Beendigung der Verbindung (V) die an der Verbindung beteiligten Mobilstationen (MS1, MS2, MS3) anweist, die Reservierung der Übertragungsressourcen für diese Verbindung zu beenden.

11. Funkkommunikationssystem
- mit einer ersten Mobilstation (MS1), einer zweiten Mobilstation (MS2) sowie weiteren Mobilstationen (MS3, MS4, MS5),
- mit einer Speichereinrichtung (M) zum Speichern von Positionsinformationen (PI1..5) über die erste Mobilstation (MS1), die zweite Mobilstation (MS2) sowie über die weiteren Mobilstationen (MS3, MS4, MS5), **gekennzeichnet durch**
- eine zentrale Routingeinrichtung (R) zum Ermitteln einer Route einer Verbindung (V) zwischen der ersten Mobilstation (MS1) und der zweiten Mobilstation (MS2) über wenigstens eine der weiteren Mobilstationen (MS3) anhand der gespeicherten Positionsinformationen (PI1..5) und zum Erzeugen von Routinginformationen (RI), die der ermittelten Route entsprechen,
- wobei die Routingeinrichtung (R) eine Übertragungseinheit (TX/RX) aufweist zum Übertragen der Routinginformationen (RI) zur ersten Mobilstation (MS1), zur zweiten Mobilstation (MS2) und zu der wenigstens einen der weiteren Mobilstationen (MS3).

12. Zentrale Routingeinrichtung (R) für ein Funkkommunikationssystem,
- mit Mitteln (P) zum Erzeugen einer Route einer Verbindung (V) zwischen einer ersten Mobilstation (MS1) und einer zweiten Mobilstation (MS2) über wenigstens eine weitere Mobilstation (MS3) anhand von Positionsinformationen (PI1..3) der ersten Mobilstation, der zweiten Mobilstation und der weiteren Mobilstationen
- und mit einer Übertragungseinheit (TX/RX) zum Übertragen der Routinginformationen (RI) zur ersten Mobilstation (MS1), zweiten Mobilstation (MS2) und zu den weiteren Mobilstationen (MS3).

13. Mobilstation (MS3) für ein Funkkommunikationssystem,
- mit Mitteln (MP) zum Empfang von von einer zentralen Routingeinrichtung (R) auf der Basis von Positionsinformationen (PI1..5) erzeugten Routinginformationen (RI) für eine Verbindung (V) und zur Auswertung der empfangenen Routinginformationen (RI)
- und mit Mitteln (MTX/RX) zum Übertragen von von einer ersten Mobilstation (MS1) erhaltenen Daten der Verbindung (V) entsprechend der Routinginformationen (RI) zu einer zweiten Mobilstation (MS2).

## Claims

1. Method for routing a connection (V) from a first mobile station (MS1) to a second mobile station (MS2) by way of at least one further mobile station (MS3) in a radio communication system, wherein positional information (PI1..3) is acquired by way of the first mobile station (MS1), the second mobile station (MS2) and by way of the further mobile stations (MS3), **characterised in that**
- a central routing device (R) determines a route for the connection (V) based on the positional information (PI1..3),
- and the routing device (R) generates routing information (RI) corresponding to the determined route and transmits said routing information to the first mobile station (MS1), the second mobile station (MS2) and the further mobile stations (MS3).

2. Method according to claim 1, wherein
- the mobile stations (MS1, MS2, MS3) are located in the radio coverage area of at least one base station (BS) of a cellular mobile radio network,
- the routing device (R) transmits the routing information (RI) to the base stations (BS)
- and the base stations (BS) transmit the routing information (RI) to the mobile stations (MS1, MS2, MS3).

3. Method according to claim 2, wherein
the mobile stations (MS1, MS2, MS3) determine the positional information (PI1..3) and transmit it for acquisition purposes to the base stations (BS).

4. Method according to one of claims 2 or 3, wherein
- the mobile stations (MS1, MS2, MS3) have a first operating mode in which they are operated in the cellular mobile radio network in accordance with a first radio standard,
- the mobile stations (MS1, MS2, MS3) have a second operating mode in which they form an ad hoc network with one another in accordance with a second radio standard,
- and during the connection (V) for which the routing device (R) determines the routing information (RI) the mobile stations (MS1, MS2, MS3) are operated in the second operating mode.

5. Method according to claim 4, wherein
the mobile stations (MS1, MS2, MS3) are only placed in the second operating mode when the cellular mobile radio network reaches a limit value for its capacity loading.

6. Method according to one of the preceding claims, wherein
- the second mobile station (MS2) makes available a specific service (S),
- service information (SI) concerning the service (S) made available by the second mobile station (MS2) is stored in a storage device (M),
- the stored service information (SI) is communicated to the first mobile station (MS1),
- on the basis of the service information (SI) notified to it, the first mobile station (MS1) signals to the routing device (R) that it would like to access the service (S),
- and the routing device (R) thereupon establishes the connection (V) from the first mobile station (MS1) to the second mobile station (MS2) by generating the corresponding routing information (RI).

7. Method according to claim 6 in combination with one of claims 2 to 5, wherein
the base stations (BS) broadcast the service information (SI) stored in the storage device (M).

8. Method according to one of the preceding claims, wherein the routing information (RI) contains details concerning the transmit power level at which the mobile stations (MS1, MS2, MS3) participating in the connection are to operate the connection (V).

9. Method according to one of the preceding claims, wherein the routing information (RI) contains details concerning which transmission resources the mobile stations (MS1, MS2, MS3) participating in the connection are to reserve for the connection (V).

10. Method according to claim 8, wherein
on termination of the connection (V) the routing device (R) instructs the mobile stations (MS1, MS2, MS3) participating in the connection to terminate the reservation of the transmission resources for this connection.

11. Radio communication system
- having a first mobile station (MS1), a second mobile station (MS2) and further mobile stations (MS3, MS4, MS5),
- having a storage device (M) for storing positional information (PI1..5) about the first mobile station (MS1), the second mobile station (MS2) and about the further mobile stations (MS3, MS4, MS5), **characterised by**
- a central routing device (R) for determining a route for a connection (V) between the first mobile station (MS1) and the second mobile station (MS2) by way of at least one of the further mobile stations (MS3) on the basis of the stored positional information (PI1..5), and for generating routing information (RI) corresponding to the determined route,
- wherein the routing device (R) has a transmit unit (TX/RX) for transmitting the routing information (RI) to the first mobile station (MS1), to the second mobile station (MS2) and to the at least one of the further mobile stations (MS3).

12. Central routing device (R) for a radio communication system,
- having means (P) for generating a route for a connection (V) between a first mobile station (MS1) and a second mobile station (MS2) by way of at least one further mobile station (MS3) on the basis of positional information (PI1..3) of the first mobile station, the second mobile station and the further mobile stations
- and having a transmit unit (TX/RX) for transmitting the routing information (RI) to the first mobile station (MS1), to the second mobile station (MS2) and to the further mobile stations (MS3).

13. Mobile station (MS3) for a radio communication system,
- having means (MP) for receiving routing information (RI) generated by a central routing device (R) on the basis of positional information (PI1..5) for a connection (V) and for evaluating the received routing information (RI)
- and having means (MTX/RX) for transmitting data received from a first mobile station (MS1) for the connection (V) to a second mobile station (MS2) in accordance with the routing information (RI).

## Revendications

1. Procédé pour le routage d'une liaison (V) d'une première station mobile (MS1) à une seconde station mobile (MS2) par au moins une autre station mobile (MS3) dans un système de radiocommunication, dans lequel des informations de position (PI1..3) sur la première station mobile (MS1), la seconde station mobile (MS2) et sur les autres stations mobiles (MS3) sont enregistrées, **caractérisé en ce que**
- un dispositif de routage (R) central détermine un itinéraire pour la liaison (V) à l'aide des informations de position (PI1..3)
- et le dispositif de routage (R) génère des informations de routage (RI) qui correspondent à l'itinéraire déterminé, et transmettent ces informations de routage à la première station mobile (MS1), à la seconde station mobile (MS2) et aux autres stations mobiles (MS3).

2. Procédé selon la revendication 1, dans lequel
- les stations mobiles (MS1, MS2, MS3) se trouvent dans la zone radio d'au moins une station de base (BS) d'un réseau de téléphonie mobile cellulaire,
- le dispositif de routage (R) transmet les informations de routage (RI) aux stations de base (BS),
- et les stations de base (BS) transmettent les informations de routage (RI) aux stations mobiles (MS1, MS2, MS3).

3. Procédé selon la revendication 2, dans lequel
les stations mobiles (MS1, MS2, MS3) déterminent les informations de position (PI1..3) et les transmettent pour leur enregistrement aux stations de base (BS).

4. Procédé selon l'une quelconque des revendications 2 ou 3, dans lequel
- les stations mobiles (MS1, MS2, MS3) ont un premier mode de service dans lequel elles sont exploitées dans le réseau de téléphonie mobile cellulaire selon un premier standard radio,
- les stations mobiles (MS1, MS2, MS3) ont un second mode de service dans lequel elles forment les unes avec les autres un réseau ad hoc selon un second standard radio,
- et pendant la liaison (V), pour laquelle le dispositif de routage (R) détermine les informations de routage (RI), les stations mobiles (MS1, MS2, MS3) sont exploitées dans le second mode de service.

5. Procédé selon la revendication 4, dans lequel
les stations mobiles (MS1, MS2, MS3) sont placées d'abord dans le second mode de service lorsque le réseau de téléphonie mobile cellulaire atteint une valeur limite de son utilisation maximale de capacité.

6. Procédé selon l'une quelconque des revendications précédentes, dans lequel
- la seconde station mobile (MS2) met à disposition un service (S) défini,
- des informations de service (SI) sur le service et mises à disposition par la seconde station mobile (MS2) sont stockées dans un dispositif de stockage,
- les informations de service (SI) stockées sont communiquées à la première station mobile (MS1),
- la première station mobile (MS1) signale au dispositif de routage (R) sur la base des informations de service (SI) qui lui sont communiquées qu'elle voudrait recourir au service (S),
- et le dispositif de routage (R) établit ensuite la liaison (V) de la première station mobile (MS1) à la seconde station mobile (MS2) en générant les informations de routage (RI) correspondantes.

7. Procédé selon la revendication 6 en liaison avec l'une quelconque des revendications 2 à 5, dans lequel
les stations de base (BS) radiodiffusent les informations de service (SI) stockées dans le dispositif de stockage (M).

8. Procédé selon l'une quelconque des revendications précédentes, dans lequel
des informations de routage (RI) contiennent des indications sur la puissance d'émission avec laquelle les stations mobiles (MS1, MS2, MS3) impliquées dans la liaison doivent exploiter la liaison (V).

9. Procédé selon l'une quelconque des revendications précédentes, dans lequel
les informations de routage (RI) contiennent des indications sur les ressources de transmission que les stations mobiles (MS1, MS2, MS3) impliquées dans la liaison doivent réserver pour la liaison (V).

10. Procédé selon la revendication 8, dans lequel
le dispositif de routage (R) ordonne à la fin de la liaison (V) aux stations mobiles (MS1, MS2, MS3) impliquées dans la liaison d'achever la réservation des ressources de transmission pour cette liaison.

11. Système de radiocommunication comprenant
- une première station mobile (MS1), une seconde station mobile (MS2) et d'autres stations mobiles (MS3, MS4, MS5),
- un dispositif de stockage (M) pour le stockage d'informations de position (PI1..5) relatives à la première station mobile (MS1), à la seconde station mobile (MS2) ainsi qu'aux autres stations mobiles (MS3, MS4, MS5),
**caractérisé par**
- un dispositif de routage (R) central pour la détermination d'un itinéraire d'une liaison (V) entre la première station mobile (MS1) et la seconde station mobile (MS2) par l'intermédiaire d'au moins l'une des autres stations mobiles (MS3) à l'aide des informations de position (PI1..5) stockées et pour générer des informations de routage (RI) qui correspondent à l'itinéraire déterminé,
- le dispositif de routage (R) présentant une unité de transmission (TX/RX) pour la transmission d'informations de routage (RI) à la première station mobile (MS1), à la seconde station mobile (MS2) et au moins l'une des autres stations mobiles (MS3).

12. Dispositif de routage (R) centralisé pour un système de radiocommunication, comprenant
- des moyens (P) pour générer un itinéraire d'une communication (V) entre une première station mobile (MS1) et une seconde station mobile (MS2) par au moins une autre station mobile (MS3) à l'aide d'informations de position (PI1..3) de la première station mobile, de la seconde station mobile et des autres stations mobiles
- et une unité de transmission (TX/RX) pour la transmission des informations de routage (RI) à la première station mobile (MS1), à la seconde station mobile (MS2) et aux autres stations mobiles (MS3).

13. Station mobile (MS3) pour un système de radiocommunication, comprenant
- des moyens (MP) pour la réception d'informations de routage (RI) générés par un dispositif de routage (R) central sur la base d'informations de position (PI1..5) pour une liaison et pour l'analyse des informations de routage (RI) reçues
- et des moyens (MTX/RX) pour la transmission de données, reçues d'une première station mobile (MS1), de la liaison (V) en fonction des informations de routage (RI) à une autre station mobile (MS2).
